# EUROPÄISCHE PATENTSCHRIFT

(11) **EP 2 235 401 B1**
(45) Veröffentlichungstag und Bekanntmachung des Hinweises auf die Patenterteilung: **27.04.2011**
(21) Anmeldenummer: 08861402.9
(22) Anmeldetag: 17.12.2008
(51) Int. Cl.: F16H 57/04

(54) **SCHMIERVORRICHTUNG FÜR EIN GESCHWINDIGKEITS-WECHSELGETRIEBE**
LUBRICATING DEVICE FOR A VARIABLE SPEED TRANSMISSION
DISPOSITIF DE LUBRIFICATION POUR UNE BOÎTE DE VITESSES

(30) Priorität: 19.12.2007 DE 102007061354
(43) Veröffentlichungstag der Anmeldung: 06.10.2010
(73) Patentinhaber: Audi AG, 85045 Ingolstadt (DE)
(72) Erfinder: RUSTEBERG, Stefan, 38550 Isenbüttel (DE)
(74) Vertreter: Lehle, Josef
(86) Internationale Anmeldenummer: PCT/EP2008/010771
(87) Internationale Veröffentlichungsnummer: WO 2009/077174

(56) Entgegenhaltungen:
- DE-A1- 4 117 409
- DE-A1- 10 253 416
- JP-A- 2007 211 938

## Beschreibung

Die Erfindung betrifft eine Schmiervorrichtung für Geschwindigkeits-Wechselgetriebe mit einem integrierten Zwischenachsdifferenzial für Kraftfahrzeuge gemäß dem Patentanspruch 1.

Derartige auch als Schaltgetriebe bezeichnete Wechselgetriebe für Allradantrieb von Kraftfahrzeugen sind bekannt. Die Schmierölversorgung der besagten Synchronkupplung und des Zwischenachsdifferenziales erfolgt u. a. durch einen in der Welle bzw. Abtriebswelle des Getriebes angeordneten Längskanal, der über Radialkanäle und/oder Radialspalte insbesondere durch Zentrifugalwirkung die Schmierstellen mit Schmieröl versorgt. Die Dimensionen der Radialkanäle und/oder Radialspalte sind konstruktiv so festgelegt, dass stets eine ausreichende Schmierölversorgung im Fahrbetrieb des Kraftfahrzeuges gewährleistet ist.

Die JP 2007 211 938 A offenbart eine Schmiervorrichtung für ein Geschwindigkeits-Wechselgetriebe für Kraftfahrzeuge, bei der auf einer Welle eine Synchronkupplung angeordnet ist. Die Synchronkupplung wird über einen Längskanal der Welle und davon abzweigende Radialkanäle mit Schmieröl fahrgeschwindigkeitsabhängig versorgt.

Aus der DE 41 17 409 A1 ist eine fahrgeschwindigkeitsabhängige Schmierung eines Geschwindigkeits-Wechselgetriebes bekannt. Dazu sind in einer Welle ein mit Schmieröl versorgter Längskanal und davon ausgehende Radialkanäle vorgesehen.

Die DE 102 53 416 A1 offenbart ein Geschwindigkeits-Wechselgetriebe mit einem integrierten Zwischenachsdifferenzial für Kraftfahrzeuge. Hierzu sind auf einer Hohlwelle Synchronkupplungen und ein Zwischenachsdifferenzial angeordnet.

Aufgabe der Erfindung ist es, eine Schmiervorrichtung vorzuschlagen, die mit baulich einfachen Mitteln eine noch besser auf definierte Fahrbedingungen eingestellte Schmierölversorgung sicherstellt.

Diese Aufgabe wird erfindungsgemäß mit den Merkmalen des Patentanspruches 1 gelöst. Vorteilhafte Weiterbildungen der Erfindung beinhalten die weiteren Patentansprüche.

Erfindungsgemäß wird vorgeschlagen, dass in den Längskanal Mittel integriert sind, die fahrgeschwindigkeitsabhängig den Schmierölzufluss zu der Synchronkupplung und dem Zwischenachsdifferenzial verändern. Der Erfindung liegt die Erkenntnis zugrunde, dass bei definierten Fahrzuständen eine bevorzugte Schmierung der Synchronkupplung und bei anderen Fahrzuständen eine bevorzugte Schmierung des Zwischenachsdifferenziales vorteilhaft ist, wobei durch die besagten Mittel der konstruktiv durch die Kanalquerschnitte etc. vorgegebene Schmierölzufluss nicht erhöht werden muss. Die Mittel können in dem Längskanal angeordnete Klappen, Fächer, Schieber, etc. sein, die ggf. elektrisch, elektromechanisch oder dergleichen über ein Fahrgeschwindigkeitssignal gesteuert sind.

Bevorzugt wird jedoch vorgeschlagen, dass die Mittel fliehkraftbetätigt sind und somit ohne jeglichen zusätzlichen Steuerungsaufwand funktionieren. Besonders vorteilhaft können die Mittel bei höheren Fahrgeschwindigkeiten und geöffneter Synchronkupplung vermehrt Schmieröl zu der Synchronkupplung leiten. Dabei wurde erkannt, dass aufgrund der hohen Differenzdrehzahlen der Funktionsteile der Synchronkupplung bei höheren Fahrgeschwindigkeiten eine zunehmende Schmierölversorgung von Vorteil ist und den Verschleiß dieser Funktionsteile wie Synchronringe, etc. vermindern kann.

Bevorzugt können dabei die Mittel durch Drosselelemente gebildet sein, die den Schmierölzufluss zum Zwischenachsdifferenzial bei höheren Fahrgeschwindigkeiten zumindest verringern, was bei baulich geringem Aufwand gleichzeitig den Schmierölzufluss zu der Synchronkupplung erhöht. Die verringerte Schmierölzufuhr zum Zwischenachsdifferenzial bei höheren Fahrgeschwindigkeiten ist unbedenklich, da wie erfindungsgemäß erkannt wurde in diesen Bereichen keine bzw. nur sehr geringe Drehzahldifferenzen in den Funktionsteilen des Differenziales, wie Ausgleichsräder, etc. auftreten. Im unteren Fahrgeschwindigkeitsbereich hingegen ist die Schmierölversorgung zum Differenzial ungedrosselt, so dass eine ausreichende Schmierung der Funktionsteile z. B. bei durchdrehenden Rädern des Kraftfahrzeuges sichergestellt ist.

In baulich und funktionell günstiger Anordnung können die Drosselelemente stromab der zu der Synchronkupplung abzweigenden Radialkanäle in den Längskanal eingesetzt sein und somit quasi in Doppelfunktion bei höheren Fahrgeschwindigkeiten den Durchströmquerschnitt des Längskanales zumindest vermindern und gleichzeitig die Schmierölversorgung der Synchronkupplung erhöhen.

Die Drosselelemente können in technisch besonders einfacher Weise Fliehgewichte sein, die in eine den Längskanal weitgehend freigebende Stellung federnd vorgespannt sind und die bei einer einer höheren Fahrgeschwindigkeit entsprechenden Wellendrehzahl in eine den Querschnitt des Längskanales zumindest verringernde Stellung ausfahren.

Dazu können in günstiger Anpassung an den zentralen Längskanal der Welle die Fliehgewichte kreissegmentförmig ausgebildet und in einem ringförmigen, in den Längskanal eingesetzten Rahmen in Radialführungen radial verschiebbar geführt und mittels eines gemeinsamen Federringes in der eingefahrenen Stellung gehalten sein.

Dabei können die Fliehgewichte in der ausgefahrenen Stellung eine im Wesentlichen durchgehende Ringwand bilden, die den Längskanal im Durchmesser verringert und somit in einfacher Weise den Längskanal bzw. den Schmierölzufluss zum Zwischenachsdifferenzial drosselt.

Ferner können bevorzugt vier etwa jeweils 90 Grad des Umfanges des Längskanales abdeckende Fliehgewichte vorgesehen sein, die in zwei in axialer Richtung hintereinander liegenden, sich kreuzenden Radialführungen derart verschiebbar geführt sind, dass sie sich in der eingefahrenen Stellung zur Freigabe eines ausreichenden, radial außen liegenden Ringquerschnittes des Längskanales überlappen.

Bevorzugt kann die Synchronkupplung eine Synchrondoppelkupplung zum Schalten der ersten und der zweiten Übersetzungsstufe des Wechselgetriebes sein. Bei entsprechender Anordnung kann jedoch auch eine Synchronkupplung zum Schalten eines Rückwärtsganges oder eines dritten und vierten Ganges des Wechselgetriebes wie vorbeschrieben beölt sein. Schließlich kann das Zwischenachsdifferenzial ein an sich bekanntes drehmomentfühlendes selbstsperrendes Differenzial sein.

Ein Ausführungsbeispiel der Erfindung ist im Folgenden mit weiteren Einzelheiten näher erläutert Die Zeichnung zeigt in:
- Fig. 1: einen teilweisen Längsschnitt durch ein Geschwindigkeits-Wechselge- triebe mit integriertem Zwischenachsdifferenzial für Kraftfahrzeuge und mit einer von der Fahrgeschwindigkeit abhängigen Schmierölversor- gung einer Synchronkupplung und des Differenziales;
- Fig. 2: einen Querschnitt entlang der Linie II - II der Fig. 1 durch die Welle des Wechselgetriebes mit zentralem Längskanal und durch die eingesetz- ten Drosselelemente in vergrößertem Maßstab, wobei die Drossel- elemente in der eingefahrenen Position dargestellt sind;
- Fig. 3: die Drosselelemente gemäß Fig. 2. In der ausgefahrenen, drosselnden Position;
- Fig. 4: die Drosselelemente gemäß Fig. 2 in raumbildlicher Darstellung und In der eingefahrenen Position; und
- Fig. 5: die Drosselelemente gemäß Fig. 3 in ebenfalls raumbildlicher Dar- stellung und in ausgefahrener, drosselnder Position.

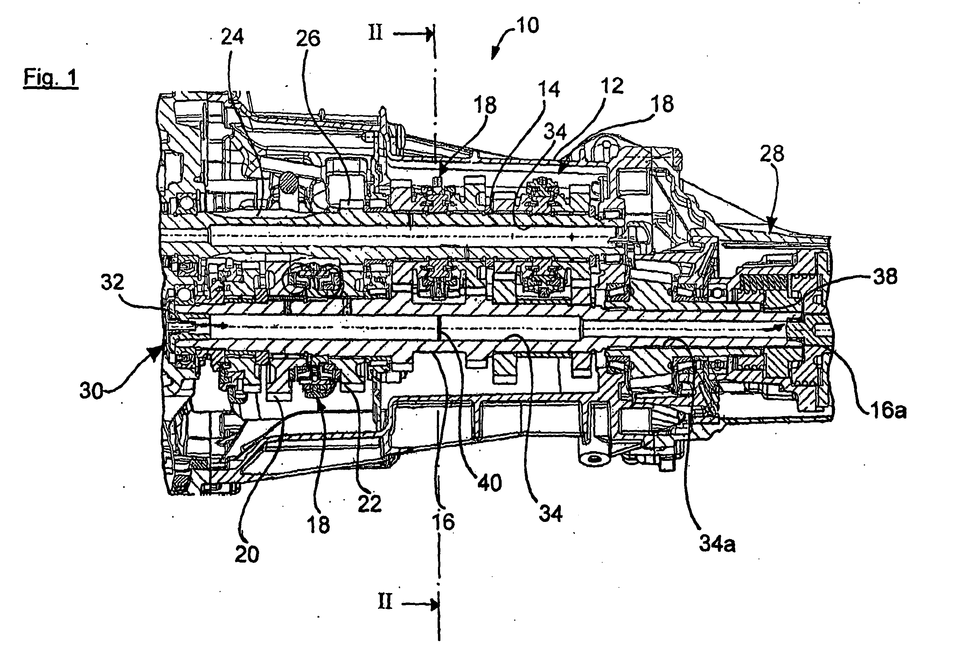

Das in der Fig. 1 nur teilweise dargestellte Geschwindigkeits-Wechselgetriebe 10 bzw. Schaltgetriebe ist nur soweit beschrieben, als dies für das Verständnis der vorliegenden Erfindung erforderlich ist.

In dem Gehäuse 12 des Wechselgetriebes 10 sind über entsprechende Wälzlager (ohne Bezugszeichen) eine Eingangswelle 14 und eine darunter liegende Abtriebswelle 16 drehbar gelagert. Auf der Eingangswelle 14 und der Abtriebswelle 16 sind sechs Vorwärts- und eine Rückwärtsgang-Übersetzungsstufe bildende und jeweils miteinander kämmende Zahnräder angeordnet, die über Doppelsynchronkupplungen 18 alternierend schaltbar sind.

Im Detail sind auf der Abtriebswelle 16 zwei Loszahnräder 20, 22 drehbar gelagert, die mit Festzahnrädern 24, 26 auf der Eingangwelle 14 kämmen und die zum Schalten der ersten und zweiten, langsamen Übersetzungsstufe ausgelegt sind, wobei die Schaltmuffe der dazwischen angeordneten Synchronkupplung 18 über eine nicht ersichtliche Schaltvorrichtung entsprechend axial verschoben wird. Die Doppelsynchronkupplung 18 ist bekannter Bauart und deshalb nicht weiter beschrieben.

An die eine Stirnseite bei 16a der Abtriebswelle 16 fest angebaut ist ein Zwischenachsdifferenzial bzw. ein selbstsperrendes Torsendifferenzial 28, das in nicht ersichtlicher Weise auf ein vorderes und ein hinteres Achsdifferenzial zum Antrieb der vorderen und der hinteren Räder des Kraftfahrzeuges abtreibt. Das Torsendifferenzial 28 ist ebenfalls bekannter Bauart und nicht weiter beschrieben.

Das Wechselgetriebe 10 weist eine Schmiervorrichtung auf, über die die Wälzlanger, die Zahnräder, die Synchronkupplungen 18, das Torsendifferenzial 28 und alle eine Schmierölversorgung benötigenden Getriebeelemente geschmiert werden.

Die Schmierölvorrichtung sammelt u.a. über nur teilweise ersichtliche Auffangeinrichtungen 30 von den Getriebeelementen aus dem Schmierölsumpf des Wechselgetriebes 10 abgeschleudertes Schmieröl auf und leitet es in bekannter Weise über Zuführrohre 32 u. a. in zentrale Längskanäle 34 in der Eingangswelle 14 und der Abtriebswelle 16.

Im Folgenden wird der Zweig der Schmiervorrichtung des Wechselgetriebes 10 beschrieben, der die Abtriebswelle 16 mit den Loszahnrädern 20, 22 und dem Torsendifferenzial 28 betrifft.

Dazu zweigen von dem Längskanal 34 der Abtriebswelle 16 mehrere Radialkanäle 36 ab, die die Schmierölversorgung der Loszahnräder 20, 22 und der Doppelsynchronkupplung 18 sicherstellen. Das in den Längskanal 34 eingeleitete Schmieröl wird dabei bei drehender Abtriebswelle 16 durch Zentrifugalwirkung in die entsprechenden Lagerstellen und durch die nicht ersichtlichen Synchronringe der Synchronkupplung 18 gedrückt.

Der sich bis zu der Stirnseite 16a der Abtriebswelle 16 erstreckende Längskanal 34 weist zudem über einen an der Stirnseite 16a eingearbeiteten Radialspalt 38 eine Flüssigkeitsverbindung mit den Funktionsteilen des Torsendifferenziales 28 auf, so dass des weiteren über diesen Radialspalt 38 (es können auch mehrere Radialspalte 38 sein) und durch Zentrifugalwirkung Schmieröl aus dem Längskanal 34 in das Torsendifferenzial 28 gedrückt wird. Der Längskanal 34 kann wie ersichtlich einen teilweise im Durchmesser verminderten Abschnitt 34a aufweisen.

Ausgehend von dem Schmierölzufluss auf der linken Seite der Zeichnung Fig. 1 über das in den Längskanal 34 einragende Zuführrohr 32 sind stromab der Radialkanäle 36 Mittel 40 (in Fig. 1 nur angedeutet) in den Längskanal 34 eingesetzt, die fliehkraftbetätigt bei einer höheren Drehzahl der Abtriebswelle 16, die proportional zur Fahrgeschwindigkeit des Kraftfahrzeuges ist, die Schmierölzufuhr zum Torsendifferenzial 28 vermindern und damit gleichzeitig eine verstärkte Schmierölversorgung der Loszahnräder 20, 22 und der Doppelsynchronkupplung 18 bewirken.

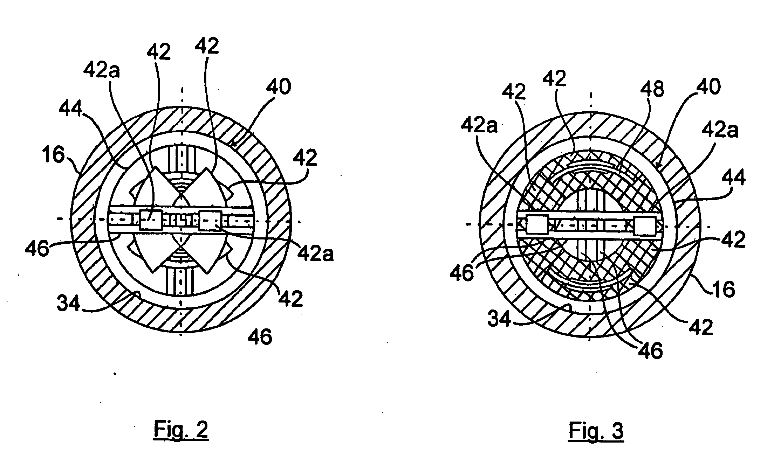

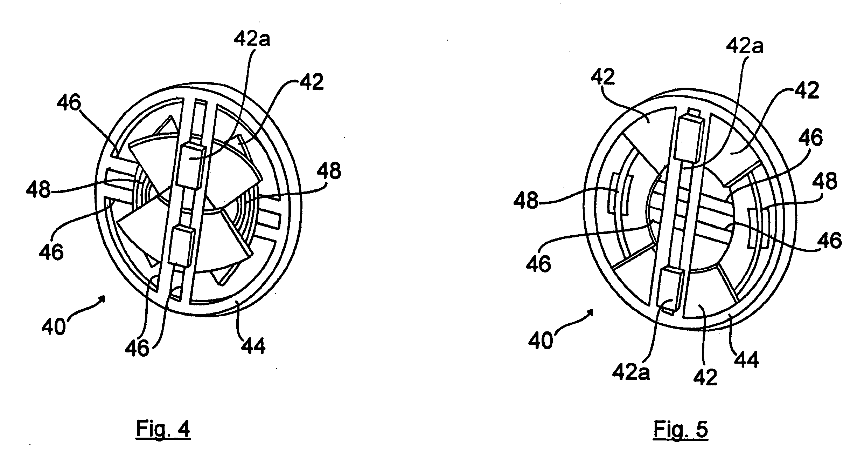

Die Mittel 40 sind gemäß den Fig. 2 bis 4 durch vier als Drosselelemente wirkende, kreissegmentförmige und sich jeweils über einen Umfang von 90 Grad erstreckende Fliehgewichte 42 gebildet, die in eine den Längskanal 34 weitgehend freigebende Stellung (Fig. 2 und 4) radial nach innen federnd vorgespannt sind und die bei einer einer höheren Fahrgeschwindigkeit entsprechenden Drehzahl der Abtriebswelle 16 in eine den lichten Querschnitt des Längskanales 34 verringernde Stellung (Fig. 3 und 5) ausfahren.

Die Fliehgewichte 42 sind dabei in einem ringförmigen, in den Längskanal 34 eingesetzten Rahmen 44 in stegförmigen, Führungsschlitze aufweisenden Radialführungen 46 über Führungszapfen 42a radial verschiebbar geführt und mittels eines gemeinsamen, umlaufenden Federringes 48 (nur teilweise ersichtlich) in der eingefahrenen Stellung gehalten. Der Rahmen 44 mit den Radialführungen 46 ist aus Kunststoff hergestellt, während der Federring 48 ein mit definierter Vorspannung ausgeführter Gummiring ist und die Fliehgewichte 42 aus Stahl hergestellt sind. Die Werkstoffpaarung Kunststoff-Stahl ist jedoch nicht zwingend und kann durch andere geeignete Werkstoffpaarungen ersetzt werden.

In der ausgefahrenen Position (Fig. 3 und 5) bilden die vier Fliehgewichte 42 wie ersichtlich eine den Längskanal 34 im lichten Querschnitt verringernde, im Wesentlichen durchgehende und an der Kanalwand des Längskanales 34 anliegende Ringwand (in der Fig. 3 durch eine eingezeichnete Kreuzschraffur her-vorgehoben).

Durch die sich kreuzenden Radialführungen 46 der Fliehgewichte 42 und durch deren Anordnung in axialer Richtung hintereinander (vgl. raumbildliche Darstellungen Fig. 4 und 5) können sich die Fliehgewichte 42 in der eingefahrenen Position zur Freigabe eines ausreichenden, lichten Ringquerschnittes des Längskanales 34 überlappen. Es versteht sich, dass auch der ringförmige Rahmen 44 eine gewisse Einschnürung des Längskanales 34 bildet, dem kann aber konstruktiv durch entsprechende Auslegung des Längskanales 34 in der Abtriebswelle 16 Rechnung getragen werden.

Bei einer niedrigeren Fahrgeschwindigkeit des Kraftfahrzeuges mit entsprechend geringerer Drehzahl der Abtriebswelle 16, z. B. bei in die erste oder zweite Übersetzungsstufe geschalteter Synchrondoppelkupplung 18, sind die Fliehgewichte 42 als Drosselelemente in der eingefahrenen Position gemäß den Fig. 2 und 4.

Dementsprechend ist zwischen den Fliehgewichten 42 und dem Rahmen 44 bzw. der Kanalwand des Längskanales 34 ein ringförmiger Durchgang geschaffen, der zu der Beölung der Loszahnräder 20, 22 und der Synchronkupplung 18 über die Radialkanäle 36 auch eine ausreichende Schmierölzufuhr zu den Funktionsteilen des Torsendifferenziales 28 sicherstellt. Dabei strömt das über das Zuführrohr 32 zugeführte Schmieröl aufgrund der drehenden Abtriebswelle 16 walzenförmig an der Kanalwand des Längskanales 34 entlang und wird durch Zentrifugalwirkung in die Radialkanäle 36 und den Radialspalt 38 verteilt.

Mit zunehmender Fahrgeschwindigkeit des Kraftfahrzeuges über die Übersetzungsauslegung der ersten und zweiten Obersetzungsstufe hinaus und entsprechend zunehmender Drehzahl der Abtriebswelle 16 fahren die Fliehgewichte 42 radial nach außen aus und bilden schließlich die beschriebene Ringwand (Fig. 3, kreuzschraffierter Bereich), die den walzenförmigen Schmierölzufluss zum Torsendifferenzial 28 entsprechend verringert. Durch diese Verringerung wird zugleich die Schmierölversorgung der Loszahnräder 20, 22 und der jetzt nicht aktiv geschalteten Synchrondoppelkupplung 18 erhöht.

Somit ist durch Einbau der Mittel 40 bzw. der Drosselelemente 42 eine veränderliche Schmierölversorgung des Wechselgetriebes 10 mit integriertem, selbstsperrenden Torsendifferenzial 28 geschaffen, die den tatsächlichen Anforderungen an eine ausreichende Schmierölversorgung abhängig von der Fahrgeschwindigkeit des Kraftfahrzeuges vermehrt Rechnung trägt; bei niedrigeren Fahrgeschwindigkeiten wird der zugeführte Schmierölstrom in konstruktiv vorgegebenen Teilmengen aufgeteilt, während bei höheren Fahrgeschwindigkeiten die Schmierölversorgung des Torsendifferenziales 28 vermindert und die Schmierölversorgung der Synchronkupplung 18 erhöht wird.

Die Erfindung ist nicht auf das dargestellte Ausführungsbeispiel beschränkt. Anstelle der beschriebenen Fliehgewichte 42 können auch andere Drosselelemente als Mittel 40 verwendet sein, z. B. auslenkbare Klappen, Fächer, elektrisch oder elektromechanisch steuerbare Ventile, etc. Die Feder kann in Abweichung zum gezeigten Gummiring auf eine Schraubendruckfeder, Schraubenzugfeder oder dergleichen sein.

Anstelle zweier Übersetzungstufen mit den Zahnrädern 20, 24 und 22, 26 können auch weitere Übersetzungsstufen, z. B. der Rückwärtsgang, in die veränderliche Schmierölversorgung eingebunden sein.

Das Zwischenachsdifferenzial 28 kann auch ein Kegelraddifferenzial, ein Planetenraddifferenzial sein, die in das Wechselgetriebe 10 entsprechend integriert sind.

## Patentansprüche

1. Schmiervorrichtung für ein Geschwindigkeits-Wechselgetriebe (10) mit einem integrierten Zwischenachsdifferenzial (28) für Kraftfahrzeuge, wobei auf einer Welle (16) des Getriebes (10) eine Synchronkupplung (18) zum Schalten der ersten und zweiten Übersetzungsstufe des Wechselgetriebes (10) oder zum Schalten der dritten und vierten Übersetzungsstufe des Wechselgetriebes (10) oder zum Schalten eines Rückwörtsganges des Wechselgetriebes (10) und das Zwischenachsdifferenzial (28) angeordnet sind und wobei die Synchronkupplung (18) und das Zwischenachsdifferenzial (28) über einen zentralen Längskanal (34) in der Welle (16) und davon abzweigende Radialkanäle und/oder Radialspalte (36, 38) mit Schmieröl versorgt werden, wobei die Schmiervorrichtung in den Längskanal (34) integrierte Mittel (40) aufweist, die fahrgeschwindigkeitsabhängig den Schmierölzufluss zu der Synchronkupplung (18) und dem Zwischenachsdifferenzial (28) verändern.

2. Schmiervorrichtung nach Anspruch 1, **dadurch gekennzeichnet, dass** die Mittel (40) fiiehkraftbetätigt sind.

3. Schmiervorrichtung nach Anspruch 1 oder 2, **dadurch gekennzeichnet, dass** die Mittel (40) bei höheren Fahrgeschwindigkeiten und geöffneter Synchronkupplung (18) vermehrt Schmieröl zu der Synchronkupplung (18) leiten.

4. Schmiervorrichtung nach einem der vorhergehenden Ansprüche, **dadurch gekennzeichnet, dass** die Mittel (40) durch Drosselelemente (42) gebildet sind, die den Schmierölzufluss zum Zwischenachsdifferenzial (28) bei höheren Fahrgeschwindigkeiten zumindest verringern.

5. Schmiervorrichtung nach einem der vorhergehenden Ansprüche, **dadurch gekennzeichnet, dass** die Drosselelemente (42) stromab der zu der Synchronkupplung (18) abzweigenden Radialkanäle (36) in den Längskanal (34) eingesetzt sind und bei höheren Fahrgeschwindigkeiten den Durchströmquerschnitt des Längskanales (34) zumindest vermindern.

6. Schmiervorrichtung nach einem der vorhergehenden Ansprüche, **dadurch gekennzeichnet, dass** die Drosselelemente Fliehgewichte (42) sind, die in eine den Längskanal (34) weitgehend freigebende Stellung federnd vorgespannt sind und die bei einer einer höheren Fahrgeschwindigkeit entsprechenden Wellendrehzahl in eine den Querschnitt des Längskanales (34) zumindest verringernde Stellung ausfahren.

7. Schmiervorrichtung nach Anspruch 6, **dadurch gekennzeichnet, dass** die Fliehgewichte (42) kreissegmentförmig ausgebildet und in einem ringförmigen, in den Längskanal (34) eingesetzten Rahmen (44) in Radialführungen (46) radial verschiebbar geführt und mittels eines gemeinsamen Federringes (46) in der eingefahrenen Stellung gehalten sind.

8. Schmiervorrichtung nach den Ansprüchen 6 und 7, **dadurch gekennzeichnet, dass** die Fliehgewichte (42) in der ausgefahrenen Stellung eine den Längskanal (34) im Durchmesser verringernde, im Wesentlichen durchgehende und an der Kanalwand anliegende Ringwand bilden.

9. Schmiervorrichtung nach den Ansprüchen 6 bis 8, **dadurch gekennzeichnet, dass** vier etwa jeweils 90 Grad des Umfanges des Längskanales (34) abdeckende Fliehgewichte (42) vorgesehen sind, die in zwei in axialer Richtung hintereinander liegenden, sich kreuzenden Radialführungen (46) derart verschiebbar geführt sind, dass sie sich in der eingefahrenen Stellung zur Freigabe eines ausreichenden Ringquerschnittes des Längskanales (34) überlappen.

10. Schmiervorrichtung nach einem der vorhergehenden Ansprüche, **dadurch gekennzeichnet, dass** die Synchronkupplung eine Synchrondoppelkupplung (18) zum Schalten der ersten und der zweiten Übersetzungsstufe des Wechselgetriebes (10) ist.

11. Schmiervorrichtung nach einem der vorhergehenden Ansprüche, **dadurch gekennzeichnet, dass** das Zwischenachsdifferenzial ein selbstsperrendes Torsendifferenzial (28) ist.

## Claims

1. Lubricating device for a speed-change gearbox (10) with an integrated inter-axle differential (28) for motor vehicles, whereby are arranged on a shaft (16) of the gearbox (10) a synchronous coupling (18) for switching to the first and second transmission stages of the speed-change gearbox (10), or for switching to the third and fourth transmission stage of the speed-change gearbox (10), or for switching the speed-change gearbox (10) and the inter-axle differential (28) into reverse gear; whereby the synchronous coupling (18) and the inter-axle differential (28) are supplied with lubricating oil via a central longitudinal channel (34) in the shaft (16) and therefrom branching radial channels and/or radial grooves (36, 38); whereby the lubricating device in the longitudinal channel (34) is provided with an integrated device (40), which in a speed-related manner regulates the lubricating oil flow to the synchronous coupling (18) and inter-axle differential (28).

2. Lubricating device according to claim 1, **characterised in that** the integrated device (40) is driven by centrifugal force.

3. Lubricating device according to claim 1 or 2, **characterized in that** the integrated device (40) at higher travelling speeds and opened synchronous coupling (18) increases the flow of lubricating oil to the synchronous coupling (18).

4. Lubricating device according to one of the preceding claims, **characterized in that** the integrated device (40) is formed by throttle elements (42), which at least reduce the flow of lubricating oil to the inter-axle differential (28) at higher travelling speeds.

5. Lubricating device according to one of the preceding claims, **characterized in that** the throttle elements (42) are inserted downstream of the radial channels (36) in the longitudinal channel (34) branching to the synchronous coupling (18), and at higher travelling speeds at least decrease the flow cross section of the longitudinal channel (34).

6. Lubricating device according to one of the preceding claims, **characterized in that** the throttle elements are centrifugal weights (42), which are resiliently biased in the longitudinal channel (34) in a largely releasing position, and (34) at shaft speeds corresponding to higher travelling speeds at least extend in a reducing position in a cross section of the longitudinal channel (34).

7. Lubricating device according to claim 6, **characterized in that** radially displaceable centrifugal weights (42) are formed as circle segments and introduced in radial guides (46) in a ring-shaped frame (44) in the longitudinal channel (34), and held in a retracted position by a common spring ring (46).

8. Lubricating device according to claims 6 and 7, **characterized in that** the centrifugal weights (42) in the extended position in the longitudinal channel (34) form a diameter-decreasing, substantially continuous, annular wall adjacent to the channel wall.

9. Lubricating device according to claims 6 to 8, **characterized in that** four centrifugal weights (42) are provided that each approximately cover a 90 degree portion of the circumference of the longitudinal channel (34), and which are fitted to be slidably movable in axially tandem intersecting radial guides (46), in such a manner that the centrifugal weights (42) when in the retracted position overlap to create a sufficient annular cross-section in the longitudinal channel (34).

10. Lubricating device according to one of the preceding claims, **characterized in that** the synchronous coupling is a synchronous double coupling (18) for switching of the first and second transmission stage of the speed-change gearbox (10).

11. Lubricating device according to one of the preceding claims, **characterized in that** the inter-axle differential is a self-locking torque differential (28).

## Revendications

1. Dispositif de lubrification pour une boîte de vitesses (10) comprenant un différentiel inter-ponts intégré (28) pour véhicules automobiles, dans lequel un embrayage synchrone (18) pour passer le premier et deuxième rapport de la boîte de vitesses (10) ou pour passer le troisième et quatrième rapport de la boîte de vitesses (10) ou pour passer une marche arrière de la boîte de vitesses (10) et le différentiel inter-ponts (28) sont disposés sur un arbre (16) de la boîte de vitesses (10) et dans lequel l'embrayage synchrone (18) et le différentiel inter-ponts (28) sont alimentés en huile de lubrification par le biais d'un canal longitudinal central (34) dans l'arbre (16) et de canaux radiaux et/ou interstices radiaux (36, 38) partant de celui-ci, dans lequel le dispositif de lubrification présente des moyens intégrés (40) dans le canal longitudinal (34) qui modifient en fonction de la vitesse de déplacement, l'afflux d'huile de lubrification à l'embrayage synchrone (18) et au différentiel inter-ponts (28).

2. Dispositif de lubrification selon la revendication 1, **caractérisé en ce que** les moyens (40) sont actionnés par force centrifuge.

3. Dispositif de lubrification selon la revendication 1 ou 2, **caractérisé en ce que** les moyens (40) conduisent davantage d'huile de lubrification à l'embrayage synchrone (18) lorsque les vitesses de déplacement sont plus élevées et l'embrayage synchrone (18) est ouvert.

4. Dispositif de lubrification selon l'une quelconque des revendications précédentes, **caractérisé en ce que** les moyens (40) sont formés par des étrangleurs (42) qui réduisent au moins l'afflux d'huile de lubrification au différentiel inter-ponts (28) en cas de vitesses de déplacement plus élevées.

5. Dispositif de lubrification selon l'une quelconque des revendications précédentes, **caractérisé en ce que** les étrangleurs (42) sont placés dans le canal longitudinal (34) en aval des canaux radiaux (36) partant vers l'embrayage synchrone (18) et réduisent au moins la section transversale de passage du canal longitudinal (34) en cas de vitesses de déplacement plus élevées.

6. Dispositif de lubrification selon l'une quelconque des revendications précédentes, **caractérisé en ce que** les étrangleurs sont des masselottes (42) qui sont précontraintes de manière élastique dans une position libérant largement le canal longitudinal (34) et qui, dans le cas d'une vitesse de rotation d'arbre correspondant à une vitesse de déplacement plus élevée, se déploient dans une position réduisant au moins la section transversale du canal longitudinal (34).

7. Dispositif de lubrification selon la revendication 6, **caractérisé en ce que** les masselottes (42) sont réalisées en forme de segment de cercle et guidées de manière radialement coulissante dans des guidages radiaux (46) dans un cadre (44) annulaire placé dans le canal longitudinal (34) et maintenues dans la position rentrée au moyen d'une rondelle ressort commune (46).

8. Dispositif de lubrification selon les revendications 6 et 7, **caractérisé en ce que** les masselottes (42) forment dans la position déployée une paroi annulaire réduisant le diamètre du canal longitudinal (34), essentiellement continue et s'appliquant contre la paroi du canal.

9. Dispositif de lubrification selon les revendications 6 à 8, **caractérisé en ce que** sont prévues quatre masselottes (42) couvrant chacune à peu près 90 degrés de la circonférence du canal longitudinal (34), qui sont guidées de manière coulissante dans deux guidages radiaux (46) se croisant situés l'un derrière l'autre dans le sens axial de telle sorte qu'elles se chevauchent dans la position rentrée pour libérer une section transversale annulaire suffisante du canal longitudinal (34).

10. Dispositif de lubrification selon l'une quelconque des revendications précédentes, **caractérisé en ce que** l'embrayage synchrone est un double embrayage synchrone (18) pour passer le premier et le deuxième rapport de la boîte de vitesses (10).

11. Dispositif de lubrification selon l'une quelconque des revendications précédentes, **caractérisé en ce que** le différentiel inter-ponts est un différentiel Torsen autobloquant (28).
